# EUROPEAN PATENT APPLICATION

(11) **EP 4 435 288 A1**
(43) Date of publication of application: **25.09.2024**
(21) Application number: 24165750.1
(22) Date of filing: 25.03.2024
(51) Int. Cl.: F16F 9/06, F16F 9/516, F16F 9/02

(54) **TRACTION GAS SHOCK ABSORBER DEVICE**

(30) Priority: 24.03.2023 IT 202300005688
(71) Applicant: Vapsint S.r.l., 31010 Godega di S. Urbano (TV) (IT)
(72) Inventor: Gava, Andrea, 31016 Cordignano (TV) (IT)
(74) Representative: Petraz, Gilberto Luigi

(57) **Abstract**

Gas shock absorber device (10) of the traction type comprising a cylindrical body (11) provided with at least a first internal cylinder (15) and in which a piston unit (17), provided with a rod (21), is axially sliding between a contracted position (P1), in which the latter is disposed inside the cylindrical body (11), and an extracted position (P2), in which the rod (21) exits from the cylindrical body (11) where there is a fluid (F) able to generate a flow entering into and/or exiting from the first internal cylinder (15). The piston unit (17) is provided with a dynamic sealing member (20) connected to the rod (21) and having a sealing element (39) which, in relation to the passage between the contracted position (P1) and the extracted position (P2), is mobile between an open position (PA) and a closed position (PC).

## Description

### FIELD OF THE INVENTION

The present invention concerns a gas shock absorber device of the traction type which can, for example, be used in mechanisms for closing a door, a frame or a window, which can be sliding or hinged, for the window and door frames, furniture or automotive sectors.

### BACKGROUND OF THE INVENTION

Gas shock absorber devices that exploit the compression of a gas present inside them to lift or lower an object are known.

Such devices usually comprise a cylindrical body in which a piston is axially sliding, the piston being connected to a rod which acts as an actuation member. Inside the cylindrical body there is pressurized gas, usually pure nitrogen, and a shock absorbing liquid, for example oil.

In some shock absorber devices, the piston divides the space inside the cylindrical body into a first zone, which extends between the piston and one end of the cylindrical body, and a second zone, disposed on the opposite side of the piston with respect to the first zone.

In addition, gas shock absorber devices are known that provide an open internal cylinder, having a smaller diameter than the cylindrical body, and in which the piston is sliding. The internal cylinder defines a circumferential zone, which is outside it, which puts the first and second zone in fluidic communication for the passage of the gas and/or liquid, in relation to the movement of the piston itself.

Known gas shock absorber devices may be of the compression or traction type.

Compression devices, when the piston and the rod are loaded, subjected to a force, are in a contracted position, or closed condition, while when they are not loaded, they are in an extracted position, or open condition. Consequently, in the contracted position, the compression of the gas and/or liquid tends to take the piston and the rod outward, that is, in the extracted position.

Traction devices work the opposite way; when the piston and the rod are in the contracted position they are not loaded, while when they are in an extracted position they are loaded. Consequently, in the extracted position, the compression of the gas and/or liquid tends to take the piston and the rod inward, that is, in the contracted position.

Compression gas shock absorber devices are often used for opening doors, frames, or windows and can provide inside them a system for slowing down the travel of the piston, so as to adequately cushion the passage from the contracted to the extracted position.

Traction gas shock absorber devices are used instead of compression shock absorber devices because they are more compact and have a smaller longitudinal overall dimension. In addition, in traction gas shock absorber devices the time required for the piston and rod to move from the extracted position to the contracted position can be about half that of compression gas shock absorber devices. However, these traction devices have the disadvantage that, in relation to the movement time and therefore to the speed of the piston, cavitation and/or bubbling phenomena of the gas and/or liquid present inside them can occur. These phenomena can cause inconvenient noises during the movement, such as whistling or screeching, or can also cause device malfunctions.

There is therefore the need to perfect a gas shock absorber device of the traction type that can overcome at least one of the disadvantages of the state of the art.

To do this it is necessary to solve the technical problem of creating a traction gas shock absorber device in which the movement of the piston occurs in a controlled, or braked, manner.

In particular, one purpose of the present invention is to provide a traction gas shock absorber device that is reliable and compact.

Another purpose of the present invention is to provide a traction gas shock absorber device which does not produce unwanted noise.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the technical problem disclosed above in a new and original way, also achieving considerable advantages compared to the state of the prior art, a gas shock absorber device of the traction type according to the present invention comprises a cylindrical body provided with at least a first internal cylinder in which a piston unit is axially sliding, the piston unit being provided with a rod which is able to remain inside the cylindrical body in a contracted position and to exit from the latter in an extracted position. A fluid is present in the cylindrical body able to generate a flow entering into and/or exiting from the first internal cylinder.

In accordance with one aspect of the present invention, the piston unit is provided with a dynamic sealing member connected to the rod and having a sealing element which, in relation to the passage between the contracted position and the extracted position, is mobile respectively between an open position and a closed position, allowing and preventing the passage of the fluid into, or from, the first internal cylinder.

The first internal cylinder is provided, at one end, with a hermetic closing bottom.

Moreover, the shock absorber device comprises regulating means configured to regulate the flow of the fluid entering into and/or exiting from the first internal cylinder when the sealing element is in the closed position, thus regulating the speed of the piston unit during the passage from the contracted position to the extracted position.

In accordance with another aspect of the present invention, the regulating means comprise at least one calibrated hole defining a passage having sizes such as to slow down the flow of the fluid, thus also slowing down the speed of the piston unit from a first speed to a second speed during the passage from the contracted position to the extracted position.

Doing so achieves the advantage that the passage from the contracted position to the extracted position of the piston unit is slowed down, thus preventing the disadvantages linked to the cavitation and bubbling of the state of the art.

In accordance with a first preferred embodiment, the regulating means comprise at least a first calibrated hole made on the closing bottom to allow the controlled exit from the first internal cylinder of the fluid compressed by the dynamic sealing member.

In accordance with another aspect of the present invention, the dynamic sealing member comprises at least a first part conformed in such a way as to have a discoidal portion protruding with respect to a first cylindrical portion, and a second discoidal part connected to the cylindrical portion and protruding with respect thereto.

In particular, the sealing element is disposed outside the cylindrical portion and is mobile between the discoidal portion and the second discoidal part to determine the open position and the closed position, respectively.

In accordance with a second preferred embodiment, the regulating means comprise one or more second calibrated holes made radially in the second discoidal part and having the function of providing a passage for the fluid, by-passing the closure of the sealing element in the closed position.

In accordance with a third preferred embodiment, the regulating means comprise one or more third calibrated holes made on the internal surface of the first internal cylinder and having the function of providing a passage for the fluid, by-passing the closure of the sealing element in the closed position.

In accordance with another aspect of the present invention, the shock absorber device also comprises a second internal cylinder coaxial to the first internal cylinder with reference to an axis, distanced from it and in which the piston unit is sliding.

The cylindrical body is provided at its ends with a first and a second hermetic closing bottom with which the first and second internal cylinder are associated, respectively.

Moreover, the shock absorber device is provided with a centering bushing for centering the first and second internal cylinder which is disposed in contact with respective ends thereof, the ends being opposite with respect to an end of the cylindrical body.

In accordance with another aspect of the present invention, the centering bushing is conformed so as to have one or more centering protrusions which are able to be inserted between the first and second internal cylinder.

Furthermore, the centering bushing is provided with one or more recesses which are able to allow the passage of the fluid between the first and second internal cylinder, and between corresponding zones which are outside the first and second internal cylinder and are delimited by the first and second hermetic bottom.

The present invention also concerns a method of operation of the shock absorber device, in which a fluid generates at least one flow entering into and/or exiting from at least a first internal cylinder, and in which a piston unit, provided with a rod, slides axially at least in the first internal cylinder which passes between a contracted position, in which the rod is disposed inside the cylindrical body, and an extracted position, in which the rod exits from the cylindrical body.

In accordance with another aspect of the present invention, the method comprises an extension step and a compression step in which, in relation to the passage between the contracted position and the extracted position, and vice versa, of the piston unit, a sealing element of a dynamic sealing member connected to the rod moves respectively between an open position and a closed position, and vice versa, allowing and preventing the passage of the fluid into, or from, the first internal cylinder, which is provided with a hermetic closing bottom.

In the extension step, when the sealing element is in the closed position, regulating means regulate the flow of the fluid entering into and/or exiting from the first internal cylinder, thus also regulating the speed of the piston unit during the passage from the contracted position to the extracted position.

In accordance with another aspect of the present invention, in the extension step the fluid passes through at least one calibrated hole of the regulating means and, in relation to its sizes, the calibrated hole allows to slow down the speed of the fluid, thus also slowing down the speed of the piston unit from a first speed to a second speed during the passage from the contracted position to the extracted position.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a section view of a traction gas shock absorber device according to a first embodiment of the present invention, in a first operating condition;
- fig. 2 is a section view of the shock absorber device of fig. 1 in a second operating condition;
- fig. 3 is a detailed section view of a traction gas shock absorber device according to a second embodiment;
- fig. 4 is a detailed section view of a traction gas shock absorber device according to a third embodiment;
- figs. 5, 6 and 7 are schematic representations of an operating sequence which shows the transition from the first operating condition to the second operating condition, and vice versa.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

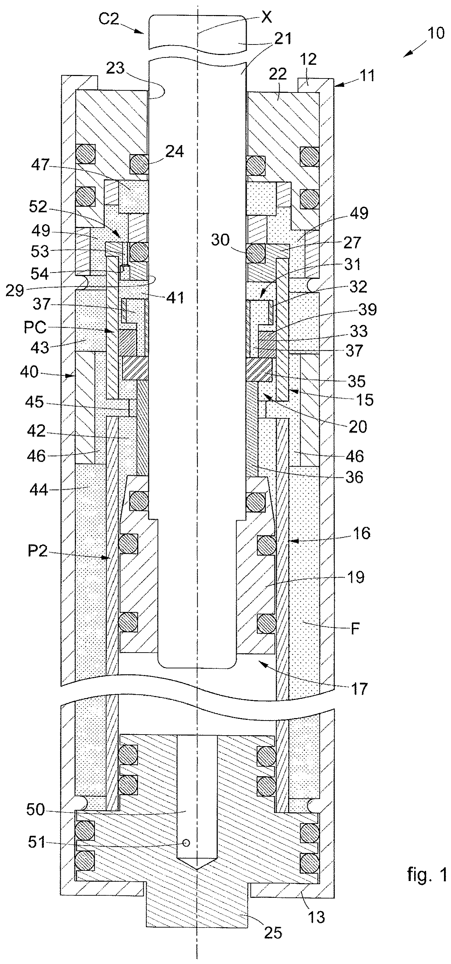

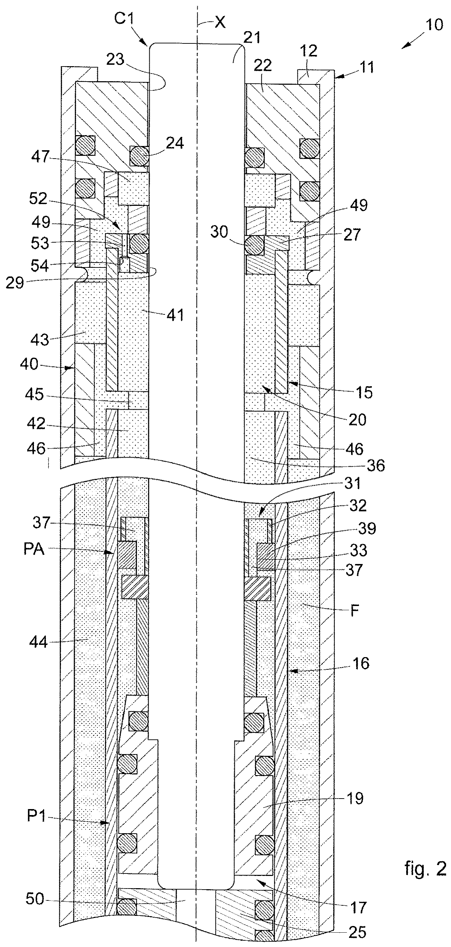

With reference to figs. 1 and 2, a gas shock absorber device 10 of the traction type according to the present invention is usable in closing mechanisms of a door, a frame, or a window.

The shock absorber device 10 comprises a cylindrical body 11 having a partly open first end 12 and a closed second end 13.

The cylindrical body 11 comprises at least a first internal cylinder 15, in which a piston unit 17 is axially sliding between a contracted position P1 and an extracted position P2.

According to preferred embodiments, the cylindrical body 11 also comprises a second internal cylinder 16, aligned with the first internal cylinder along an axis X, axially distanced therefrom by a certain distance measured parallel to the axis X, and in which the piston unit 17 is sliding.

By way of a non-limiting example, the first and second internal cylinder 15, 16 have the same diameter, which is smaller than that of the cylindrical body 11.

The piston unit 17 comprises a hermetically sealed stop member 19, a dynamic sealing member 20 connected to the stop member 19, and a rod 21 which is connected to the stop member 19 and to the dynamic sealing member 20 and which acts as an actuation member between the contracted position P1 and the extracted position P2.

According to the embodiments shown here, the stop member 19 is able to slide only in the second internal cylinder 16, and the dynamic sealing member 20 is able to slide in both the first as well as the second internal cylinder 15, 16.

According to other embodiments not shown in the drawings, both the stop member 19 and also the dynamic sealing member 20 are able to slide in the first and in the second internal cylinder 15, 16.

Depending on the position of the piston unit 17, the shock absorber device 10 can selectively assume a first operating condition, or compression condition, C1 (fig. 2), and a second operating condition, or extension condition, C2 (fig. 1).

In the compression condition C1 (fig. 2) the piston unit 17 is in a contracted position P1, with the rod 21 disposed almost completely inside the cylindrical body 11.

In the extension condition C2 (fig. 1) the piston unit 17 is in an extracted position P2, with the rod 21 exiting from the cylindrical body 11 through the first end 12.

The cylindrical body 11 (figs. 1 and 2) is normally filled with a fluid F which can comprise a mixture of a pressurized gas and a shock absorbing liquid, cooperating with each other. In relation to the movement of the piston unit 17, the fluid F, subjected to selective and alternating compressions, is able to determine the passage from the compression condition C1 to the extension condition C2, or vice versa, as will be described in detail below.

The shock absorber device 10 is provided with a first hermetic bottom 22 configured to perimetrically seal the first end 12, allowing only the passage of the rod 21 by means of an exit hole 23 provided with a sealing ring 24 cooperating with the external surface of the rod 21. We must clarify that the sizes of the exit hole 23 are mating with those of the rod 21.

Furthermore, the shock absorber device 10 is provided with a second hermetic bottom 25 to seal the second end 13.

According to some embodiments, both the first and also the second hermetic bottom 22, 25 are provided with circumferential sealing rings, or discs, of a known type, cooperating with the internal surface of the cylindrical body 11.

The first internal cylinder 15 is associated with the first hermetic bottom 22 and communicates with the exit hole 23. The second internal cylinder 16 is attached to the second hermetic bottom 25.

The first internal cylinder 15 is provided with a closing bottom 27 for closing the latter from the part of the first end 12, allowing the passage of the rod 21 through a corresponding passage hole 29 having a hermetic sealing ring 30 for the fluid F, able to cooperate with the external surface of the rod 21.

Specifically, the closing bottom 27 is disposed in contact with a part of the first hermetic bottom 22.

The passage hole 29 has sizes mating with the sizes of the rod 21 and is coaxial to the exit hole 23.

According to possible embodiments, the dynamic sealing member 20 can be made in a single body or divided into several parts.

In accordance with the embodiment shown here, the dynamic sealing member 20 comprises at least a first part 31 conformed in such a way as to have a discoidal portion 32 protruding with respect to a first cylindrical portion 33, and a second discoidal part 35 connected to the cylindrical portion 33 and protruding with respect thereto.

According to some embodiments, the dynamic sealing member 20 also comprises a third cylindrical part 36 which is connected to the second discoidal part 35 and to the stop member 19.

According to some embodiments, both the discoidal portion 32 and also the second discoidal part 35 have a slightly smaller diameter than the internal diameter of the first and second internal cylinder 15, 16, so as to define an annular passage for the fluid F present in the first or second internal cylinder 15, 16.

The first part 31 is provided with two or more grooves 37, for example four, diametrically opposite each other, which extend both into the discoidal portion 32 and also into the cylindrical portion 33, creating corresponding passages for the fluid F present in the first or in the second internal cylinder 15, 16.

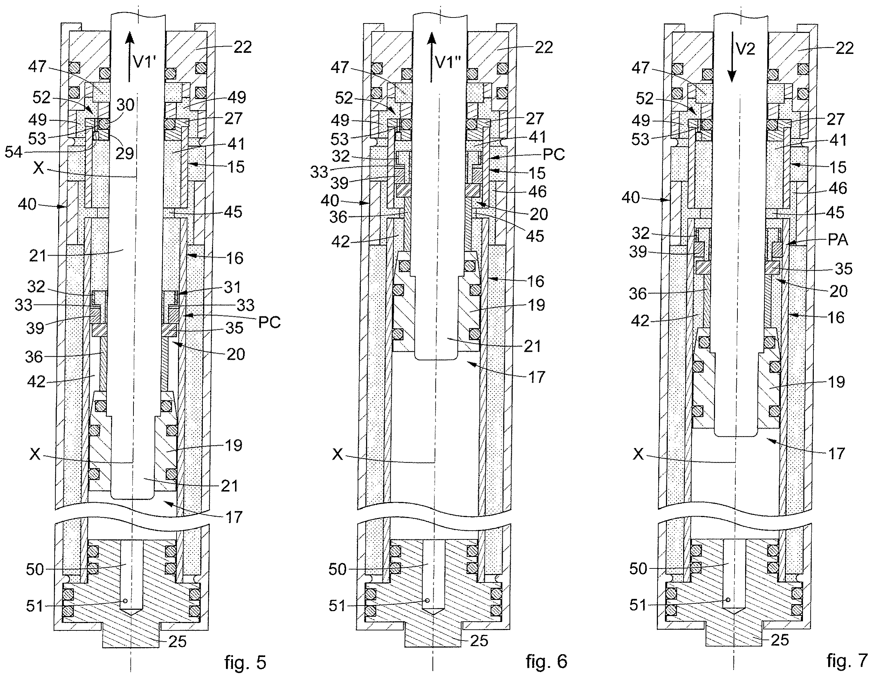

The dynamic sealing member 20 is provided with a sealing element 39 which, in relation to the passage between the contracted position P1 and the extracted position P2 of the piston unit 17, is mobile between an open position PA (figs. 2 and 7) and a closed position PC (figs. 1 and from 3 to 6), respectively, to allow and prevent the passage of the fluid F into or from the first internal cylinder 15, passing through the same dynamic sealing member 20.

The sealing member 39 is disposed outside the cylindrical portion 33 and is mobile between the discoidal portion 32 of the first part 31 and the second discoidal part 35. For example, the sealing element 39 is of a known type, for example an O-ring.

In particular, the sealing element 39, in the open position PA (figs. 2 and 7), is in contact with the first discoidal portion 32 so as to leave a space close to the second discoidal part 35 for the passage of the fluid F through the grooves 37. Instead, the sealing element 39, in the closed position PC (figs. 1 and from 3 to 6), is in contact with the second discoidal part 35 so as to close the passage of the fluid F through the grooves 37.

According to preferred embodiments, inside the cylindrical body 11 there is a centering bushing 40 (figs. 1 and 2) for centering the first and second internal cylinder 15, 16, which is disposed in contact with respective ends thereof, opposite with respect to the first and second hermetic bottom 22, 25.

From this, it follows that the cylindrical body 11 is divided into several operating zones in which the fluid F is able to circulate in relation to the movement and position of the piston unit 17, including a first zone 41 in the first internal cylinder 15, a second zone 42 in the second internal cylinder 16, a third zone 43, outside the first internal cylinder 15, between the first hermetic bottom 22 and the centering bushing 40, and a fourth zone 44, outside the second internal cylinder 16, between the centering bushing 44 and the second hermetic bottom 25.

According to possible embodiments, the centering bushing 40 is conformed in such a way as to have one or more centering protrusions 45 able to be inserted in the space present between the first and second internal cylinder 15, 16, and one or more recesses 46 able to allow the passage of the fluid F between the first and second zone 41, 42 and between the third and fourth zone 43, 44.

Advantageously, the recesses 46 are conformed in such a way as to put all the zones 41-44 in communication simultaneously.

According to some embodiments, the first hermetic bottom 22 can be provided with a collection chamber 47 of the fluid F interposed between the first internal cylinder 15 and the sealing ring 24 and connected to the third zone 43 by means of one or more channels 49.

The collection chamber 47 is created in such a way that, within it, the fluid F is in contact with a part of the rod 21 to substantially exert a lubricating action thereon, by means of the liquid present therein.

We must clarify that, in the second zone 42, the fluid F is not present between the second hermetic bottom 25 and the head surface of the stop member 20.

In addition, according to some embodiments, the second hermetic bottom 25 is provided with a vent chamber 50 having a vent hole 51 in fluidic communication with the outside to guarantee an atmospheric pressure in the second zone 42, between the head surface of the stop member 20 and the second hermetic bottom 25.

In accordance with one aspect of the present invention, the shock absorber device 10 is provided with regulating means 52 configured to regulate the flow of the fluid F entering into or exiting from the first internal cylinder 15 when the sealing element 39 is in the closed position PC, so as to also regulate the speed of the piston unit 17 during the passage from the contracted position P1 to the extracted position P2.

According to possible embodiments, the regulating means 52 comprise at least one calibrated hole 53, 55, 56 defining a passage for the fluid F entering into and/or exiting from the first internal cylinder 15, when the sealing element 39 is in the closed position PC, and having sizes such as to slow down the flow of the fluid F, thus also slowing down the speed of the piston unit 17 from a first speed V1' (fig. 5) to a second speed V1" (fig. 6) during the passage from the contracted position P1 to the extracted position P2.

We must clarify that when the sealing element 39 is in the open position, the regulating means 52 are disposed so as not to slow the flow of the fluid F, therefore the passage from the extracted position P2 to the contracted position P1 occurs with another speed V2 (fig. 7), substantially the same as the first speed V I'.

In accordance with a first embodiment, the regulating means 52 comprise at least a first calibrated hole 53 (figs. 1 and 2) made on the closing bottom 27 to allow the controlled exit, from the first internal cylinder 15, of the fluid F compressed by the action of the dynamic sealing member 20.

The first calibrated hole 53 puts the first internal cylinder 15, that is, the first zone 41, in fluidic communication with the third zone 43, in particular with one of the channels 49 connected to the collection chamber 47.

In this first embodiment, the first calibrated hole 53 comprises a section narrowing 54 so as to have, close to the first internal cylinder 15, that is, to the first zone 41, a smaller cross section than the one close to one of the channels 49 that are connected to the collection chamber 47, that is, the third zone 43, thus slowing down the exit of the fluid subjected to compression.

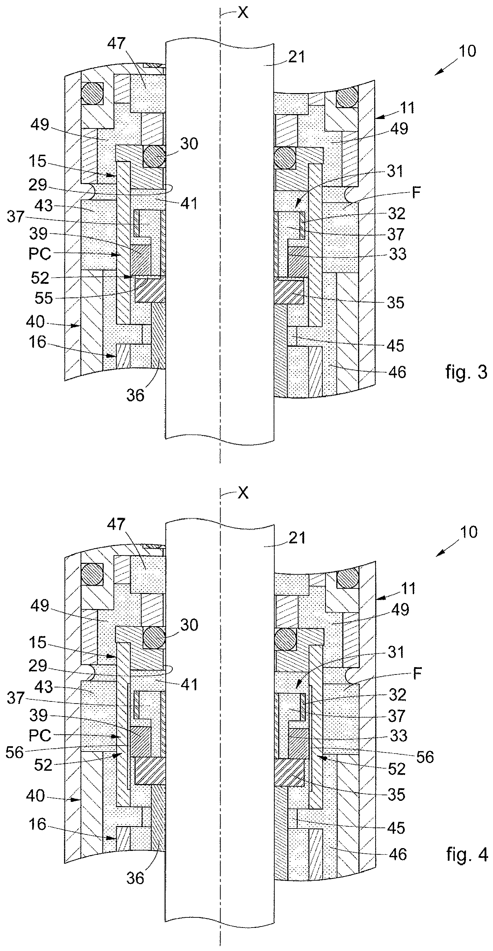

In accordance with a second embodiment, the regulating means 52 comprise one or more second calibrated holes 55 (fig. 3) made radially in the second discoidal part 35 of the dynamic sealing member 20 and substantially having the function of providing a passage for the fluid F, by-passing the closure of the sealing element 39 in the closed position PC.

There are at least two second calibrated holes 55, made on opposite parts to each other and in contact with the sealing element 39 when it is in the closed position PC, wherein the two second calibrated holes 55 have the function of slowing down the flow of the fluid F entering into and/or exiting from the first internal cylinder 15, the closing bottom 27 being hermetically sealed.

In accordance with a third embodiment, the regulating means 52 comprise one or more third calibrated holes 56 (fig. 4) made on the internal surface of the first internal cylinder 15 and substantially having the function of by-passing the closure of the sealing element 39 in the closed position PC, providing a passage for the fluid F.

Preferably, there are at least two third calibrated holes 56, made on opposite parts to each other, so as to be in contact with the latter during the passage from the contracted position P1 to the extracted position P2, and wherein the two third calibrated holes 56 have the function of slowing down the flow of the fluid F entering into and/or exiting from the first internal cylinder 15, the closing bottom 27 being hermetically sealed.

The operating method of the shock absorber device 10 comprises the following steps.

In an initial preparation step, the cylindrical body 11 is suitably filled with the fluid F.

A movement step, in which the fluid F generates at least one flow entering into and/or exiting from the first internal cylinder 15, and in which the piston unit 17 slides axially along the axis X at least in the first internal cylinder 15, passing from the contracted position P1 to the extracted position P2, and vice versa (figs. 1 and 2).

According to other embodiments, in the movement step the fluid F generates respective flows exiting from and/or entering into the first and second internal cylinder 15, 16, and the piston unit 17 slides axially along the axis X in the first and second internal cylinder 16, 15 from the contracted position P1 to the extracted position P2, and vice versa.

The movement step comprises an extension step (figs. 1, 5 and 6) in which, in relation to the passage from the contracted position P1 to the extracted position P2 of the piston unit 17, the sealing element 39 moves from an open position PA to a closed position PC, preventing the passage of the fluid F into, or from, the internal cylinder 15, through the dynamic sealing member 20. In this extension step, the means 52 regulate the flow of the fluid F entering into and/or exiting from the first internal cylinder 15, so that the piston unit 17 passes from the contracted position P1 to the extracted position P2, initially with the first speed V1' and then with the second speed V1".

The movement step comprises a compression step (figs. 2 and 7) in which, in relation to the passage from the extracted position P2 to the contracted position P1 of the piston unit 17, the sealing element 39 moves from the closed position PC to the open position PA, allowing the passage of the fluid F into, or from, the first internal cylinder 15.

In this compression step, the means 52 do not have the function of regulating the flow of the fluid F entering into and/or exiting from the first internal cylinder 15, since it is free to pass between the zones 41-44. In this way, the piston unit 17 passes from the contracted position P1 to the extracted position P2 with another speed V2, substantially the same as the first speed V1'.

According to preferred embodiments, during the extension step (figs. from 1 to 4) the fluid F passes through at least one calibrated hole 53, 55, 56 which, in relation to its sizes, allows to slow down the speed of the flow of the fluid F, thus also slowing down the speed of the piston unit 17 from the first speed V 1' to the second speed V1" during the passage from the contracted position P1 to the extracted position P2.

In accordance with the first preferred embodiment, during the extension step (figs. 5, 6, 7) the first calibrated hole 53, which the fluid F passes through, allows by means of the narrowing 54 to slow down the exit of the fluid F toward the third zone 43, that is, toward one of the channels 49 connected to the collection chamber 47, thus also slowing down the piston unit 17.

In accordance with the second preferred embodiment, during the extension step (fig. 3) the two second calibrated holes 55, which the fluid F passes through, allow to slow down the corresponding flow entering into and/or exiting from the first internal cylinder 15, since the closing bottom 27 is hermetically sealed.

In accordance with the third preferred embodiment, during the extension step (fig. 4) the two third calibrated holes 56, which the fluid F passes through, allow to slow down the corresponding flow entering into and/or exiting from the first internal cylinder 15, since the closing bottom 27 is hermetically sealed.

It is clear that modifications and/or additions of parts may be made to the shock absorber device 10 as described heretofore, without departing from the field and scope of the present invention, as defined by the claims.

It is also clear that, although the present invention has been described with reference to some specific examples, a person of skill in the art will be able to achieve other equivalent forms of traction gas shock absorber devices, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Gas shock absorber device (10) of the traction type comprising a cylindrical body (11) where there is present a fluid (F) able to generate a flow entering into and/or exiting from at least a first internal cylinder (15) in which a piston unit (17) is axially sliding, said piston unit (17) having a rod (21) which is able to remain inside said cylindrical body (11) in a contracted position (P1) and to exit from the latter in an extracted position (P2), **characterized in that** said piston unit (17) is provided with a dynamic sealing member (20) connected to said rod (21) and having a sealing element (39) which, in relation to the passage between said contracted position (P1) and said extracted position (P2), is mobile respectively between an open position (PA) and a closed position (PC), allowing and preventing the passage of said fluid (F) into, or from, said first internal cylinder (15), **and in that** it comprises regulating means (52) configured to regulate said flow of the fluid (F) entering into and/or exiting from said first internal cylinder (15) when said sealing element (39) is in said closed position (PC), thus regulating the speed of said piston unit (17) during the passage from said contracted position (P1) to said extracted position (P2).

2. Shock absorber device (10) as in claim 1, **characterized in that** said regulating means (52) comprise at least one calibrated hole (53, 55, 56) defining a passage having sizes such as to slow down the flow of said fluid (F) and the speed of said piston unit (17) from a first speed (V1') to a second speed (V1") during the passage from said contracted position (P1) to said extracted position (P2).

3. Shock absorber device (10) as in claim 1 or 2, **characterized in that** said regulating means (52) comprise at least a first calibrated hole (53) made on a closing bottom (27) of said first internal cylinder (15) to allow the controlled exit, from the latter, of said fluid (F) compressed by said dynamic sealing member (20).

4. Shock absorber device (10) as in claim 1 or 2, **characterized in that** said dynamic sealing member (20) comprises at least a first part (31) conformed in such a way as to have a discoidal portion (32) protruding with respect to a first cylindrical portion (33) to which a second discoidal part (35) is connected in a protruding manner, **and in that** said sealing element (39) is disposed outside said cylindrical portion (33) and is mobile between said discoidal portion (32) and said second discoidal part (35) to determine said open position (PA) and said closed position (PC), respectively.

5. Shock absorber device (10) as in claim 4, **characterized in that** said regulating means (52) comprise one or more second calibrated holes (55) made radially in said second discoidal part (35) and having the function of providing a passage for said fluid (F), by-passing the closure of said sealing element (39) in said closed position (PC).

6. Shock absorber device (10) as in claim 1 or 2, **characterized in that** said regulating means (52) comprise one or more third calibrated holes (56) made on the internal surface of said first internal cylinder (15) and having the function of providing a passage for said fluid (F), by-passing the closure of said sealing element (39) in said closed position (PC).

7. Shock absorber device (10) as in any claim hereinbefore, **characterized in that** it also comprises a second internal cylinder (16) coaxial to said first internal cylinder (15) with reference to an axis (X), distanced from it and in which said piston unit (17) is sliding, and a centering bushing (40) for centering said first and second internal cylinder (15, 16) which is disposed in contact with respective ends thereof, said ends being opposite with respect to a first and a second hermetic bottom (22, 25) for closing respective ends (12, 13) of said cylindrical body (11), with which said first and second internal cylinder (15, 16) are respectively associated.

8. Shock absorber device (10) as in claim 7, **characterized in that** said centering bushing (40) has one or more centering protrusions (45) which are able to be inserted between said first and second internal cylinder (15, 16), and one or more recesses (46) which are able to allow the passage of said fluid (F) between said first and second internal cylinder (15, 16) and between corresponding zones (43, 44) which are outside said first and second internal cylinder (15, 16) and are delimited by said first and second hermetic bottom (22, 25).

9. Method of operation of a shock absorber device (10) having a cylindrical body (11), in which a fluid (F) generates at least one flow entering into and/or exiting from at least a first internal cylinder (15), in which a piston unit (17), provided with a rod (21), slides axially at least in said first internal cylinder (15) and passes between a contracted position (P1) and an extracted position (P2) in which said rod (21) is disposed respectively inside or outside said cylindrical body (11), **characterized in that** it comprises an extension step and a compression step in which, in relation to the passage between said contracted position (P1) and said extracted position (P2), and vice versa, of said piston unit (17), a sealing element (39) connected to said rod (21) moves respectively between an open position (PA) and a closed position (PC), and vice versa, allowing and preventing the passage of said fluid (F) into, or from, said first internal cylinder (15), which is provided with a hermetic closing bottom (27), **and in that** in said extension step, when said sealing element (39) is in said closed position (PC), regulating means (52) regulate said flow of the fluid (F) entering into and/or exiting from said first internal cylinder (15), thus also regulating the speed of said piston unit (17) during the passage from said contracted position (P1) to said extracted position (P2).

10. Shock absorber device (10) as in claim 9, **characterized in that** in said extension step, said fluid (F) passes through at least one calibrated hole (53, 55, 56) of said regulating means (52) and, in relation to its sizes, said calibrated hole (53, 55, 56) allows to slow down the speed of said fluid (F), thus also slowing down the speed of said piston unit (17) from a first speed (V1') to a second speed (V1") during the passage from said contracted position (P1) to said extracted position (P2).
